Europäisches Patentamt

European Patent Office

Office européen des brevets

(19)

(11) EP 0 453 977 B1

(12) **EUROPÄISCHE PATENTSCHRIFT**

(45) Veröffentlichungstag und Bekanntmachung des Hinweises auf die Patenterteilung:
**27.05.1998 Patentblatt 1998/22**

(51) Int Cl.$^6$: **G06T 7/00**, G01B 11/02, G01B 11/24

(21) Anmeldenummer: **91106293.3**

(22) Anmeldetag: **19.04.1991**

(54) **Verfahren und Anordnung zur optischen Untersuchung von Prüflingen**

Method and process for optical inspection of test objects

Méthode et procédé d'inspection optique d'échantillons

(84) Benannte Vertragsstaaten:
**CH DE FR GB LI**

(30) Priorität: **26.04.1990 DE 4013309**

(43) Veröffentlichungstag der Anmeldung:
**30.10.1991 Patentblatt 1991/44**

(73) Patentinhaber:
- **Firma Carl Zeiss**
  **D-73446 Oberkochen (DE)**
  Benannte Vertragsstaaten:
  **CH DE FR LI**
- **CARL ZEISS-STIFTUNG HANDELND ALS CARL ZEISS**
  **D-89518 Heidenheim (Brenz) (DE)**
  Benannte Vertragsstaaten:
  **GB**

(72) Erfinder: **Freischlad, Klaus, Dr.**
**W-7080 Aalen (DE)**

(56) Entgegenhaltungen:
- **APPLIED OPTICS. Bd. 21, Nr. 14 , 15. Juli 1982 , NEW YORK US Seite 2470 KAZUYOSHI ITOH 'Analysis of the phase unwrapping algorithm'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Anordnung zur optischen Untersuchung von Prüflingen, bei denen die Information über den Prüfling anhand eines von einer Kamera aufgenommenen Musters vorliegt, das in einem Rechner in Form eines Rasters von Datenpunkten ausgewertet wird, indem zu den Datenpunkten Phasenwerte modulo $2\pi$ berechnet und zu einem Phasenbild zusammengestellt werden, und indem die Differenzen der Phasenwerte benachbarter Datenpunkte dieses Phasenbildes gebildet und modulo $2\pi$ dargestellt werden.

Zur optischen Untersuchung von Prüflingen sind sehr viele verschiedene Verfahren bekannt. Die Interferometrie bildet eine Gruppe dieser Verfahren.

Für interferometrische Oberflächenuntersuchungen werden eine an einer Objektoberfläche reflektierte Lichtwelle und eine an einer Referenzfläche reflektierte Lichtwelle interferenzfähig überlagert. Es entsteht ein Helligkeitsmuster, in dem die Information über die Abweichungen der Objektoberfläche von der Referenzfläche enthalten ist. Dieses Helligkeitsmuster wird von einer Kamera aufgenommen.

Interferometrische Untersuchungen werden jedoch auch in Transmission durchgeführt. Dazu wird ein Lichtstrahl in einen Meß- und einen Referenzstrahl aufgeteilt. Der Meßstrahl durchleuchtet den transparenten Prüfling. Anschließend werden beide Strahlengänge wieder interferenzfähig überlagert. Es entsteht wieder ein Helligkeitsmuster, das von einer Kamera aufgenommen wird.

Aus dem Bild des Helligkeitsmusters werden in jedem Punkt des Kamerabildes die zu den Helligkeiten gehörenden Phasenwerte berechnet und zu einem Phasenbild zusammengestellt. Für die Berechnung dieser Phasenwerte sind selbst eine Vielzahl verschiedener Verfahren bekannt. Eine gute übersicht über einen Teil dieser Verfahren sowie über deren Vor- und Nachteile ist in der Dissertation von B. Dörband, Universität Stuttgart, 1986, gegeben.

Wegen der Periodizität der Interferenzgleichung kann der zu einer Helligkeit gehörende Phasenwert jedoch stets nur bis auf ein ganzzahliges Vielfaches der Zahl $2\pi$, also modulo $2\pi$, berechnet werden. Setzt man dieses unbekannte ganzzahlige Vielfache gleich null, so treten auch unter der Voraussetzung, daß die Prüflingsoberfläche stetig ist, in den Phasenbildern sogenannte Sprungstellen auf. An diesen Sprungstellen ist die Differenz der berechneten Phasenwerte benachbarter Punkte betragsmäßig größer als die Zahl $\pi$. Zur Bestimmung der Konturen der Prüflingsoberfläche bzw. der Abweichungen des Prüflings von einem Referenzkörper ist eine Bestimmung der ganzzahligen Vielfachen, eine sogenannte Sprungstellenbeseitigung nötig.

Ein bekanntes Verfahren zur Sprungstellenbeseitigung ist von K. Itoh, in Applied Optics, 21, 2470, (1982), beschrieben. Es werden demnach zunächst die Differenzen der Phasenwerte benachbarter Punkte des Kamerabildes berechnet. Nach dem Abtasttheorem müssen diese Differenzen betragsmäßig kleiner als $\pi$ sein, so daß Sprungstellen, an denen ja die Differenz betragsmäßig größer als $\pi$ ist, eindeutig identifiziert werden können. An den Sprungstellen werden dann den Differenzen so häufig die Zahl $2\pi$ hinzuaddiert bzw. von ihnen abgezogen, daß diese bereinigten Differenzen der Phasenwerte zwischen $-\pi$ und $+\pi$ liegen. Die Differenzen werden also modulo $2\pi$ dargestellt. Durch Integration dieser modulo $2\pi$ dargestellten Differenzen der Phasenwerte über das Phasenbild erhält man schließlich eine von Sprungstellen bereinigte Phasenkarte. Bei den Phasenwerten dieser Phasenkarte ist also das ganzzahlige Vielfache der Zahl $2\pi$ bestimmt, und es können die Abweichungen der Objektoberfläche von der Referenzfläche bzw. des Prüflings von einem Referenzkörper eindeutig berechnet werden.

Aus zahlreichen anderen Veröffentlichungen, unter anderem aus der DE-A- 36 00 672 und der EP-A- 0 263 089 ist es bekannt, ein Streifenmuster auf die Objektoberfläche zu projizieren und das projizierte Streifenmuster mit einer Kamera aufzunehmen. Die Konturen der Objektoberfläche führen dann zu Verformungen des von der Kamera aufgenommenen Streifenmusters. Die Auswertung des Kamerabildes erfolgt analog zur Auswertung interferometrisch erzeugter Helligkeitsmuster, indem zunächst aus den Helligkeiten zu jedem Punkt des Kamerabildes ein Phasenwert des Streifenmusters berechnet wird. Die berechneten Phasenwerte werden zu einem Phasenbild zusammengestellt. Auch dieses Phasenbild weist Sprungstellen auf, weil wiederum die Phasenwerte nur bis auf ein ganzzahliges Vielfaches der Zahl $2\pi$ berechnet werden können.

Statistische Meßfehler, die beispielsweise durch Detektorrauschem der Kamera oder durch Einflüsse turbulenter Luft in dem Strahlengängen verursacht werden, lassen sich durch Mittelung über viele Einzelmessungen reduzieren. Eine Mittelung der Phasenwerte vor der Sprungstellenbeseitigung ist jedoch nicht möglich, da nach einer Mittelung die Sprungstellen nicht mehr beseitigt werden können. Der Grund dafür ist, daß das Abtasttheorem nach der Mittelung nicht mehr zur Identifizierung der Sprungstellen herangezogen werden kann. Deshalb wird es in dem oben zitierten Aufsatz von K. Itoh als notwendig angesehen, über die von Sprungstellen bereinigten Phasenkarten zu mitteln.

Die Berechnung der von Sprungstellen bereinigten Phasenkarten, also die Sprungstellenbeseitigung, ist jedoch ein relativ zeitaufwendiger Prozeß, weil für jeden Punkt des Phasenbildes mindestens eine Integration durchzuführen ist. Dieser Rechenaufwand bei der Sprungstellenbeseitigung ist noch wesentlich größer, wenn die zunächst berechneten Phasenwerte in verschiedenen Punkten des Phasenbildes untereinander noch auf ihre Konsistenz untersucht werden, wie dies in J. Opt. Soc. Am. A, Vol. 4, No. 1 (1987) beschrieben ist. Dieser Zeitaufwand wächst bei der Mittelung proportional zur Anzahl der Phasenbilder an, über die gemittelt wird. Für eine deutliche Reduzierung der statistischen Fehler sind deshalb sehr lange Meß- bzw. Rechenzeiten in Kauf zu nehmen, da die statistischen Fehler bekanntlich umgekehrt proportional zur Quadratwurzel der Anzahl der gemittelten Phasenbilder abnehmen.

Es ist die Aufgabe der vorliegenden Erfindung, ein Verfahren der eingangs genannten Art zu schaffen, daß eine Mittelung über eine Vielzahl vom Phasenbildern bei möglichst kurzer Meßzeit ermöglicht.

Diese Aufgabe wird erfindungsgemäß dadurch gelöst, daß vor der weiteren Auswertung die modulo $2\pi$ dargestellten Differenzen der Phasenwerte benachbarter Datenpunkte mehrerer Phasenbilder aufsummiert werden, und daß die weitere rechnerische Auswertung anhand dieser aufsummierten Differenzen erfolgt.

Im Gegensatz zu dem bekannten Verfahren werden also nicht die aus mehreren Phasenbildern berechneten Phasenwerte nach der Sprungstellenbeseitigung im jedem Datenpunkt aufsummiert. Vielmehr werden die modulo $2\pi$ dargestellten Differenzen der Phasenwerte jeweils benachbarter Datenpunkte von mehreren Phasenbildern aufsummiert. Die zeitaufwendige Sprungstellenbeseitigung zur Berechnung der Phasenkarte braucht deshalb unabhängig von der Anzahl der Phasenbilder, über die gemittelt wird, nur ein einziges Mal durchgeführt zu werden.

Das Aufsummieren der Differenzen der Phasenwerte kann in Video-Echtzeit erfolgen. Da die Sprungstellenbeseitigung wesentlich langsamer erfolgt, können diese Differenzen von vielen Phasenbildern aufsummiert werden, ohne die gesamte Meßzeit wesentlich zu vergrößern. Zur Sprungstellenbeseitigung werden die aufsummierten Differenzen der Phasenwerte über das Raster von Datenpunkten integriert.

Vorzugsweise werden die Integrale, nachdem die Integrationsprozesse der Sprungstellenbeseitigung durchgeführt sind, in jedem Datenpunkt durch die Anzahl der aufsummiertem Phasenbilder normiert. Es ist dann sichergestellt, daß aus der Phasenkarte unabhängig von der Anzahl der aufsummierten Phasenbilder die richtige Kontur der Objektoberfläche ermittelt wird, und daß sich bei der Normierung entstehende Rundungsfehler nicht fortpflanzen können.

Das erfindungsgemäße Verfahren kann angewandt werden, wenn das von der Kamera aufgenommene Muster ein Interferogramm ist. Der Meßstrahl kann sowohl am der Oberfläche des Prüflings reflektiert sein, als auch durch einen transparenten Prüfling transmittiert sein.

Das von der Kamera aufgenommene Muster kann jedoch auch eine auf den Prüfling projizierte periodische Helligkeitsverteilung sein, die entweder in Transmission oder in diffuser Reflexion von der Kamera aufgenommen wird.

Darüber hinaus kann die Kamera das Muster sowohl entlang einer einzigen Zeile als auch entlang einer Vielzahl von Zeilen aufnehmen. Die durch die Anwendung des erfindungsgemäßen Verfahrens erzielte Zeitersparnis ist jedoch im letzteren Fall, wenn ein zweidimensionales Bild aufgezeichnet wird, wesentlich größer, da die Anzahl der auszuwertenden Datenpunkte ebenfalls wesentlich größer ist.

Wenn die Kamera das Muster entlang einer Vielzahl von Zeilen aufnimmt, erfolgt die Auswertung auf einem zweidimensionalen Raster von Datenpunkten. Es werden dann sowohl die Differenzen der Phasenwerte zeilenweise benachbarter Datenpunkte als auch die Differenzen der Phasenwerte spaltenweise benachbarter Datenpunkte gebildet und jeweils modulo $2\pi$ dargestellt. Dieser Vorgang wird entsprechend der gewünschten Anzahl an Phasenbildern wiederholt, wobei die modulo $2\pi$ dargestellten Differenzen der Phasenwerte zeilen- und spaltenweise benachbarter Datenpunkte, die aus jedem Phasenbild berechnet werden, jeweils zu den entsprechenden bisherigen Werten hinzuaddiert werden.

Zur Berechnung der Phasenkarte werden dann Wegintegrale über diese aufsummierten Differenzen der Phasenwerte berechnet und die Werte der Wegintegrale durch die Anzahl der aufsummierten Kamerabilder dividiert.

Das Aufsummieren oder Mitteln der Differenzen der Phasenwerte kann prinzipiell durch ein Programm im einem Rechner erfolgen.

Besonders vorteilhaft ist jedoch eine hardwaremäßige digitalelektronische Anordnung zur Durchführung des erfindungsgemäßen Verfahrens. Diese zeichnet sich durch eine sehr hohe Geschwindigkeit aus.

Eine solche hardwaremäßige Anordnung besteht aus einer Zeilenkamera, die das Muster entlang einer Geraden aufnimmt. Die Ausgangssignale der Kamera in jedem Bildpunkt werden mit einer vorgegebenen Frequenz ausgelesen und digitalisiert. Aus den digitalisierten Ausgangssignalen werden Phasenwerte berechnet, die den beiden Eingängen eines Differenzierers, zugeführt werden. Im einem der beiden Eingänge des Differenzierers ist eine Verzögerungsleitung vorgesehen, die das diesem Eingang zugeführte Signal um eine Periode der Auslesefrequenz verzögert. Diese Verzögerung bewirkt, daß die Phasenwerte benachbarter Datenpunkte voneinander subtrahiert werden. Die modulo-$2\pi$-Operation dieser Differenz läßt sich hardwaremäßig sehr einfach dadurch realisieren, daß die Ausgangssignale des Differenzierers dieselbe Datenbreite haben wie die Eingangssignale. Diese Ausgangssignale des Differenzierers werden erst in einem Eingang eines Addierers, auf eine größere Datenbreite transformiert. Dieser Addierer addiert die modulo $2\pi$ dargestellten Differenzen der Phasenwerte den bereits in einem Bildspeicher abgespeicherten Differenzen hinzu. Die Summe wird wieder in dem Bildspeicher abgespeichert.

Nachdem die modulo $2\pi$ dargestellten Differenzen der Phasenwerte der gewünschten Anzahl von Phasenbildern aufsummiert sind, werden die Phasenwerte durch einen Integrationsprozeß in einem Rechner ermittelt und in Form einer Phasenkarte auf einem Monitor dargestellt.

Für den Fall, daß die Kamera ein zweidimensionales Bild des Musters aufnimmt, sind der Differenzierer, der Addierer und der Bildspeicher jeweils doppelt vorzusehen. Der zweite Differenzierer subtrahiert die Phasenwerte spaltenweise benachbarter Datenpunkte voneinander, und der zweite Addierer addiert die modulo $2\pi$ dargestellten Differenzen der Phasenwerte spaltenweise benachbarter Datenpunkte den bereits im dem zweiten Bildspeicher abgespeicherten Differenzen hinzu. Die Summe wird wieder im dem zweiten Bildspeicher abgespeichert.

Die Differenzierer und die Addierer bestehen vorzugsweise aus Arithmetisch-Logischen-Einheiten.

Im folgenden werden Einzelheiten der Erfindung anhand der in den Zeichnungen dargestellten Ausführungsbeispiele näher erläutert. Im einzelnen zeigen:

Figur 1a    den schematischen Strahlengang einer interferometrischen Anordnung zur Vermessung von Prüflingsoberflächen;

Figur 1b    den schematischen Strahlengang einer Anordnung zur Vermessung von Prüflingsoberflächen mit einem auf die Prüflingsoberfläche projizierten Muster; und

Figur 2    das Blockschaltbild einer hardwaremäßigen digitalelektronischen Anordnung zur Auswertung der von einer Kamera aufgenommenen zweidimensionalen Muster.

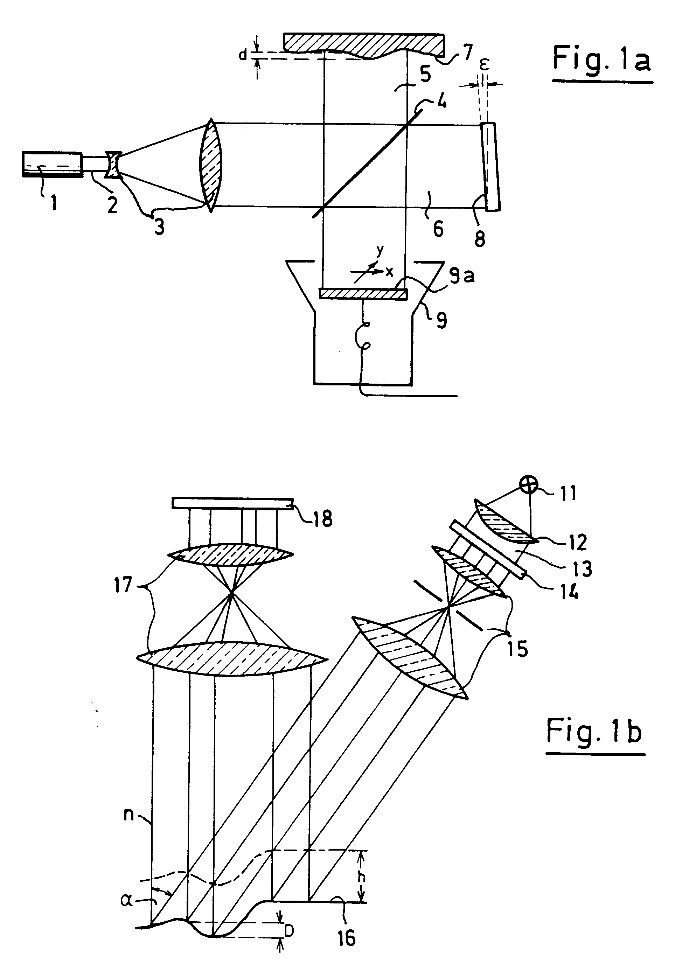

Die Anordnung in Figur 1a hat einen Laser (1), dessen Laserstrahl (2) in einem Teleskop (3) aufgeweitet wird. Ein Strahlteiler (4) lenkt den aufgeweiteten Laserstrahl in einen Meßstrahlengang (5) und im einen Referenzstrahlengang (6). Das an der Prüflingsoberfläche (7) reflektierte Licht des Meßstrahlenganges (5) und das an einem Referenzspiegel (8) reflektierte Licht des Referenzstrahlenganges (6) wird von dem Strahlteiler (4) zum Sensor (9a) der CCD-Kamera (9) gelenkt. Der Kamerasensor (9a) nimmt ein Interferogramm des an der Prüflingsoberfläche (7) reflektierten Lichts des Meßstrahlenganges und des an der Referenzfläche (8) reflektierten Lichts des Referenzstrahlenganges auf. In diesem Interferogramm ist die Information über die Abweichungen der Prüflingsoberfläche von der Referenzfläche enthalten.

Der Referenzspiegel (8) ist zur Erzeugung einer räumlichen Trägerfrequenz ($f_o$) um einen kleinen Winkel ($\epsilon$) geneigt in Referenzstrahlengang (6) angeordnet. Die Lichtintensität I (x, y) des Interferogramms ist dann durch die Interferenzgleichung

$$I\,(x,\,y) = a\,(x,\,y) + b\,(x,\,y)\,\cos\,(2\pi\,f_o\,x + w\,(x,\,y))$$

bestimmt. Dabei beschreibt a (x, y) einen gerätespezifischen "Gleichanteil", der beispielsweise durch Streulicht, Ungleichförmigkeit des Profils des Laserstrahls (2) oder eine ortsabhängige Empfindlichkeit des Kamerasensors (9a) verursacht wird. Lateral unterschiedliche Reflektivitäten der Prüflingsoberfläche (7) und des Referenzspiegels (8) werden durch die ortsabhängige Modulation b (x, y) beschrieben, und w (x, y) beschreibt die zu dem Konturen der Prüflingsoberfläche (7) gehörigen Phasenwerte. Eine Kontur der Größe (d) führt zu einer Änderung des Phasenwertes $\Delta w = 4\pi\,d/\lambda$, wobei $\lambda$ die Wellenlänge des Lasers (1) ist.

Die Phasenwerte w (x, y) werden nach der räumlichen Fourier-Transformatioms-Methode, die in der oben zitierten Dissertation vom B. Dörband beschrieben ist, für jeden Punkt des Phasenbildes berechnet und zu einem Phasenbild zusammengestellt.

Die Phasenwerte können auch nach einer anderen Methode, beispielsweise nach dem ebenfalls vom Dörband beschriebenen "Phase-stepping im Zeitbereich"-Verfahren, berechnet werden. Es wird dann aus mehreren Kamerabildern, zwischen deren Aufnahme der Referenzspiegel (8) jeweils parallel zur optischen Achse verschoben wird, ein Phasenbild erzeugt. Das Verfahren ist dadurch zwar etwas langsamer, jedoch lassen sich auch höhere Genauigkeiten erzielen.

Aufgrund der $2\pi$-Periodizität der Interferenzgleichung können aus den Lichtintensitäten I (x, y) des Interferogramms die Phasenwerte w (x, y) nur bis auf ein ganzzahliges Vielfaches der Zahl $2\pi$ bestimmt werden. Genauer gesagt, die berechneten Phasenwerte liegen zwischen $-\pi$ und $+\pi$. Überschreitet die Phasendifferenz zwischen dem beiden interferierenden Teilstrahlengängen (5, 6) an einer Stelle die Zahl $\pi$, so weist das berechnete Phasenbild an dieser Stelle eine Sprungstelle auf, an der die Differenz der Phasenwerte w (x, y) benachbarter Punkte des Phasenbildes betragsmäßig größer als $\pi$ ist.

Die in der Figur 1b dargestellte Anordnung hat einen Kondensor (12), der aus dem Licht einer Lichtquelle (11) einen parallelen Strahlengang (13) erzeugt. Der parallele Lichtstrahl (13) durchleuchtet ein Gitter (14) mit einer cosinus-förmigen Transmissions-Charakteristik. Der durch das Gitter (14) räumliche modulierte Lichtstrahl wird über ein Raumfrequenzfilter (15) telezentrisch unter einem Winkel ($\alpha$) zur Normalen (n) der Prüflingsoberfläche (16) auf die Prüflingsoberfläche (16) projiziert.

Eine Kamera (18) nimmt ein Bild des auf die Objektoberfläche (16) projizierten Helligkeitsmusters über eine telezentrische Empfangsoptik (17) senkrecht zur Prüflingsoberfläche (16) auf.

Die Konturen der Prüflingsoberfläche (16) bewirken eine Verformung des Helligkeitsmusters, d.h. je nach der Form der Prüflingsoberfläche (16) haben Punkte gleicher Lichtintensität auf der Kamera (18) größere oder geringere Abstände. Die Stärke der Verformung hängt von dem Winkel ($\alpha$) zwischen der Einfallsrichtung

des Streifenmusters und der Normalen (n) der Prüflingsoberfläche (16) ab.

Das von der Kamera (18) aufgenommene Bild ändert sich bei einer Verschiebung des Prüflings (16) parallel zu seiner Flächennormalen (n) um ganzzahlige Vielfache des Konturebenenabstandes (h) nicht. Deshalb können auch hier bei einer Auswertung des Kamerabildes die Konturen der Prüflingsoberfläche (16) nur bis auf ein ganzzahliges Vielfaches des Konturebenenabstandes (h) ermittelt werden. In Analogie zur Interferometrie ordnet man den Konturen der Prüflingsoberfläche (16) der Tiefe (D) Streifenphasen $\Delta w_s = 2\pi D/h$ zu. Die Streifenphasen lassen sich wie in der Interferometrie auch nur bis auf ein ganzzahliges Vielfaches der Zahl $2\pi$ aus den Bildern der Kamera (18) berechnen.

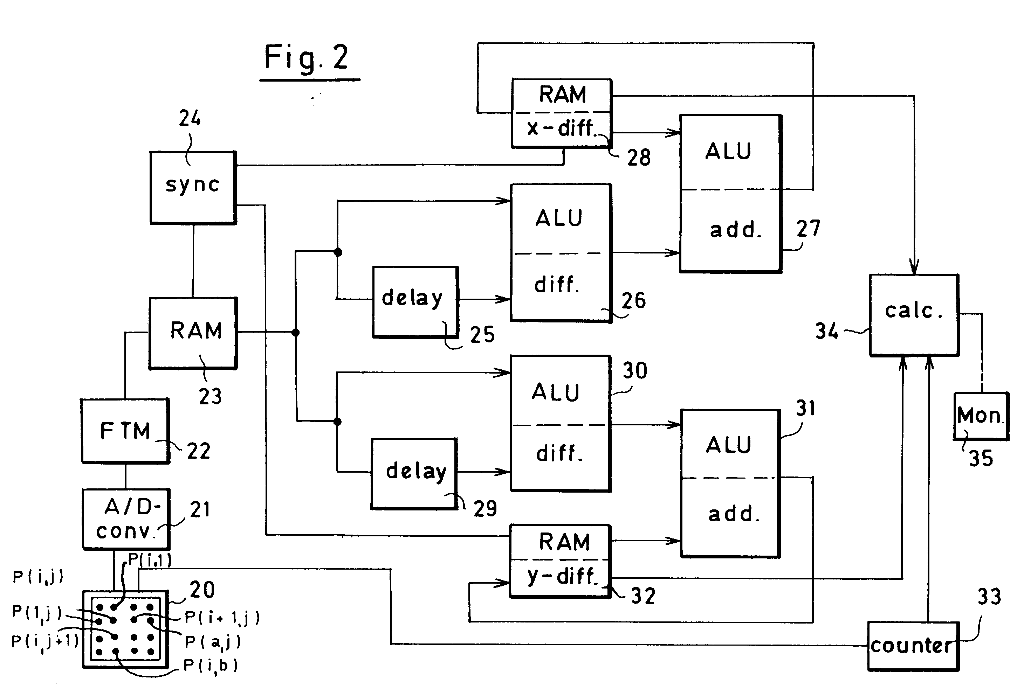

Die Anordnung nach Figur 2 hat eine CCD-Kamera (20), die das mit einer Anordnung nach der Figur 1a oder Figur 1b erzeugte Muster auf einem zweidimensionalen Raster von (a x b) Datenpunkten (P (i, j)) aufnimmt. Dabei ist (a) die Anzahl der Spalten und (b) die Anzahl der Zeilen des Sensors der Kamera (20). Die Kamera hat insgesamt 512 Zeilen und 512 Spalten, jedoch sind hier lediglich 4 Zeilen und 4 Spalten dargestellt. Die in den Datenpunkten (P (i, j)) gemessenen Intensitätswerte werden in einem Analog-Digital-Wandler (21) auf jeweils 8 Bit-Datenbreite digitalisiert.

Aus den digitalisierten Intensitätswerten werden nach der räumlichen Fourier-Transformations-Methode in einer Recheneinheit (22) die zugehörigen Phasenwerte bis auf ein ganzzahliges Vielfaches der Zahl $2\pi$ berechnet. Diese Phasenwerte liegen alle innerhalb des Intervalles $-\pi$ und $+\pi\cdot$ (1-1/128). Die Fourier-Transformations-Methode ist beispielsweise in der oben zitierten Dissertation von B. Dörband beschrieben. Auf sie braucht deshalb nicht näher eingegangen zu werden.

Die in der Recheneinheit (22) berechneten Phasenwerte w (P (i, j)) jedes Datenpunktes (P (i, j)) der Kamera werden in einem Zwischenspeicher (23) als Phasenbild gespeichert. Der Zwischenspeicher (23) wird mit einer festen Frequenz, die durch eine Synchronisationseinheit (24) vorgegeben ist, seriell ausgelesen.

Die in dem Zwischenspeicher (23) gespeicherten Phasenwerte w (P (i, j)) werden den beiden Eingängen einer ersten arithmetisch logischen Einheit (ALU) (26) zugleitet. Diese (ALU) ist als Differenzierer ausgelegt, d.h., sie bildet jeweils die Differenz zwischen den beiden Eingangssignalen.

In einem der beiden Eingänge der ersten ALU (26) ist eine Verzögerungsleitung (25) vorgesehen, deren verzögernde Wirkung gerade eine Periode der durch die Synchronisationseinheit (24) vorgegebenen Frequenz beträgt. Diese erste ALU (26) subtrahiert deshalb die Phasenwerte zweier benachbarter Datenpunkte (P (i, j), P (i + 1, j)) derselben Zeile der Kamera (20).

Die Ausgangssignale dieser ersten ALU (26) werden in derselben Datenbreite von 8 Bit dargestellt, wie die Eingangssignale. Dies entspricht im mathematischen Sinne einer modulo-$2\pi$-Darstellung der von dieser ersten ALU (26) berechneten Differenzen, d.h. die Differenzen haben ebenfalls Werte zwischen $-\pi$ und $\pi\cdot$ (1 - 1/128). Erst im Eingang einer zweiten ALU (27), einem Addierer, werden diese Differenzen auf 16 Bit-Datenbreite transformiert.

Dem zweiten Eingang der Additions-ALU (27) sind die Ausgangssignale eines ersten Bildspeichers (28) zugeführt. Diese Signale haben bereits eine Datenbreite von 16 Bit. Der erste Bildspeicher (28) wird synchron zum Zwischenspeicher (23) seriell ausgelesen. Die Ausgangssignale der Additions-ALU (27) werden in dem ersten Bildspeicher (28) wieder mit 16 Bit-Datenbreite abgespeichert.

Parallel zur ersten ALU (26) ist eine dritte ALU (30) vorgesehen, die ebenfalls als Differenzierer ausgelegt ist, und deren beiden Eingängen ebenfalls die Ausgangssignale des Zwischenspeichers (23) zugeführt sind. Jedoch ist in einem der Eingänge dieser dritten ALU (30) eine Verzögerungsleitung (29) vorgesehen, deren verzögernde Wirkung gerade das a-Fache der Periode der durch die Synchronisationseinheit (24) vorgegebenen Frequenz beträgt. Dabei ist (a) die Anzahl der Datenpunkte in einer Zeile der Kamera (20). Die dritte ALU (30) bildet deshalb die Diffferenz der Phasenwerte zweier benachbarter Punkte (P (i, j), P (i, j + 1)) derselben Spalte der Kamera (20).

Auch die Ausgangssignale dieser dritten ALU (30) werden in derselben Datenbreite von 8 Bit dargestellt, wie die Eingangssignale, d.h. die berechneten Differenzen der Phasenwerte werden ebenfalls modulo $2\pi$ dargestellt und erst im Eingang einer vierten ALU (31), einem weiteren Addierer, auf 16 Bit-Datenbreite transformiert.

Dem zweiten Eingang der vierten ALU (31) sind die Ausgangssignale eines zweiten Bildspeichers (32) zugeführt. Diese Signale haben bereits eine Datenbreite von 16 Bit. Der zweite Bildspeicher (32) wird wiederum synchron zum Zwischenspeicher (23) seriell ausgelesen und die Ausgangssignale der vierten ALU (31) werden wiederum in dem zweiten Bildspeicher (32) mit 16 Bit-Datenbreite abgespeichert.

Der dem Datenpunkt P (i, j) zugeordnete Speicherplatz des ersten Bildspeichers (28) enthält die über mehrere Bilder der Kamera (20) aufsummierte Differenz zwischen den Phasenwerten in dem Datenpunkt P (i, j) und dem benachbarten Datenpunkt derselben Zeile P (i + 1, j). Der dem Datenpunkt P (i, j) zugeordnete Speicherplatz des zweiten Bildspeichers (32) enthält die über die gleiche Anzahl an Bildern der Kamera (20) aufsummierte Differenz zwischen den Phasenwerten in dem Datenpunkt P (i, j) und dem benachbarten Datenpunkt derselben Spalte P (i, j + 1).

Durch die Transformation der ursprünglich auf 8 Bit-Datenbreite digitalisierten Signale auf 16 Bit-Datenbreite in den beiden Addierern (27, 31) ist mit dieser Anordnung eine Mittelung über bis zu 255 Kamerabilder möglich, ohne Information zu verlieren. Die statistischen Fehler lassen sich dadurch auf 1/16 reduzieren. Diese Mittelung erfolgt in Video-Echtzeit, d.h., die Mittelung über 255 Kamerabilder dauert ca. 11 Sekunden.

Eine weitere Reduzierung der statistischen Fehler ist möglich, wenn die beiden Addierer (27, 31) und die beiden Bildspeicher (28, 32) für eine größere Datenbreite als 16 Bit ausgelegt sind. Eine Auslegung dieser Bauteile auf 24 Bit-Datenbreite ermöglicht eine Mittelung über $2^{16}$ Bilder der Kamera (20). Die statistischen Fehler lassen sich dann auf 1/256 reduzieren.

Ein Zähler (33) zählt die Anzahl der Phasenbilder, über die gemittelt wird. Nach Abschluß der Mittelung liest ein Rechner (34) die in den beiden Bildspeichern (28, 32) gespeicherten Daten aus, und führt eine einzige Sprungstellenbeseitigung durch Wegintegration durch. Da die Auswertung auf einem diskreten Raster von Datenpunkten erfolgt, entspricht jedes Wegintegral einer Summation. Die vom Rechner (34) berechneten endgültigen Phasenwerte werden danach durch die Anzahl der Phasenbilder dividiert und zu einer Phasenkarte zusammengestellt, die auf einem Monitor (35) graphisch dargestellt wird.

Die Sprungstellenbeseitigung benötigt eine Rechenzeit von ca. 20 Sekunden. Daraus resultiert, daß die Vermessung der Prüflingsoberfläche inklusive der Mittelung über 255 Kamerabilder 31 Sekunden dauert. Eine hohe, interferometrische Stabilität der optischen Anordnung nach Figur 1a ist lediglich während der ersten 11 Sekunden gefordert, während der die Kamerabilder aufsummiert werden. Dagegen benötigen die bekannten Verfahren bei gleicher Rechenzeit für eine Sprungstellenbeseitigung 255 x 20 Sekunden, also fast 1 1/2 Stunden, und die hohe Stabilität muß während der ganzen Zeit gewährleistet sein.

Dieser Vergleich zeigt, daß erfindungsgemäße Anordnungen sehr gut für empfindliche und genaue Serienprüfungen in Produktionsprozesse integriert werden können. Insbesondere kann bereits die Zeit, in der die Sprungstellenbeseitigung durchgeführt wird, genutzt werden, um den Prüfling gegen einen anderen auszutauschen. Die effektive Prüfdauer für jeden Prüfling ist dann mit der für eine Einzelmessung benötigten Zeit identisch, jedoch sind die statistischen Fehler gegenüber einer Einzelmessung um einen Faktor 16 kleiner.

Häufig haben die Helligkeitsmuster in einzelnen Punkten des Kamerabildes einen zu geringen Kontrast. Ursache dafür können ungünstige optische Eigenschaften des Prüflings (beispielsweise lokal starke Streuung) sein. Es ist dann üblich, solche Datenpunkte zu maskieren, d.h. bei der weiteren Auswertung nicht zu berücksichtigen. Bei der Mittelung über mehrere Phasenbilder sollten nur solche Datenpunkte zur abschließenden Auswertung herangezogen werden, die in allen Phasenbildern unmaskiert sind.

## Patentansprüche

1. Verfahren zur optischen Untersuchung von Prüflingen (7; 16), bei denen die Information über den Prüfling (7; 16) anhand eines von einer Kamera (9; 18; 20) aufgenommenen Musters vorliegt, das in Form eines Rasters von Datenpunkten (P (i)) ausgewertet wird, indem zu den Datenpunkten (P (i)) Phasenwerte modulo $2\pi$ berechnet und zu einem Phasenbild zusammengestellt werden, und indem die Differenzen der Phasenwerte benachbarter Datenpunkte (P (i), (P (i+1)) dieses Phasenbildes gebildet und modulo $2\pi$ dargestellt werden, dadurch gekennzeichnet, daß vor der weiteren Auswertung die modulo $2\pi$ dargestellten Differenzen der Phasenwerte benachbarter Datenpunkte (P (i), P (i+1)) mehrerer Phasenbilder aufsummiert werden und daß die weitere rechnerische Auswertung anhand dieser aufsummierten Differenzen erfolgt.

2. Verfahren nach Anspruch 1, dadurch gekennzeichnet, daß zur weiteren rechnerischen Auswertung die aufsummierten Differenzen in einem Rechner (34) über das Raster von Datenpunkten (P (i)) integriert werden.

3. Verfahren nach Anspruch 2, dadurch gekennzeichnet, daß das Integral der aufsummierten Differenzen durch die Anzahl der aufsummierten Phasenbilder normiert wird.

4. Verfahren nach einem der Ansprüche 1-3, dadurch gekennzeichet, daß das von der Kamera (9) aufgenommene Muster ein Interferogramm ist.

5. Verfahren nach Anspruch 4, dadurch gekennzeichnet, daß das von der Kamera (9) aufgenommene Muster ein Interferogramm des an der Objektoberfläche (7) und des an einem Oberflächenstandard (8) reflektierten Lichts ist.

6. Verfahren nach einem der Ansprüche 1-3, dadurch gekennzeichnet, daß das von der Kamera (18) aufgenommene Muster eine auf den Prüfling (16) projizierte periodische Helligkeitsverteilung ist.

7. Verfahren nach einem der Ansprüche 1-3, dadurch gekennzeichnet, daß das von der Kamera (18) aufgenommene Muster auf die Prüflingsoberfläche (16) projiziert und durch diese transmittiert ist.

8. Verfahren nach einem der Ansprüche 1-7, dadurch gekennzeichnet, daß das von der Kamera (20) aufgenommene Muster ein zweidimensionales Raster von Datenpunkten (P (i, j) ist, daß sowohl die Differenzen der Phasenwerte zeilenweise benachbarter Datenpunkte (P (i, j), P (i+1, j)) als auch die Differenzen der Phasenwerte spaltenweise benachbarter Datenpunkte (P (i, j), P (i, j+1)) gebildet und jeweils modulo $2\pi$ dargestellt werden und daß die modulo $2\pi$ dargestellten Differenzen mehrerer Pha-

senbilder in jedem Datenpunkt aufsummiert werden.

9. Anordnung zur Durchführung des Verfahrens nach Anspruch 1, die aufweist: eine Kamera (20) zur Aufnahme des Musters, eine Recheneinheit (22) zur modulo $2\pi$ Berechnung der Phasenwerte des Musters aus den Ausgangssignalen der Kamera (20), einen Differenzierer (26) zur Bildung der modulo $2\pi$ dargestellten Differenzen der Phasenwerte benachbarter Datenpunkte, einen Bildspeicher (28) zur Speicherung der von dem Differenzierer (26) gebildeten Differenzen der Phasenwerte, sowie einen Addierer (27) zur Bildung der Summe aus den im Bildspeicher (28) abgespeicherten Differenzen der Phasenwerte eines ersten Phasenbildes und den von dem Differenzierer (26) gebildeten Differenzen der Phasenwerte benachbarter Datenpunkte eines zweiten Phasenbildes.

10. Anordnung nach Anspruch 9, wobei die Kamera (20) eine zweidimensionale Sensorfläche hat, ein zweiter Differenzierer (30) zur Bildung der Differenzen der Phasenwerte spaltenweise benachbarter Datenpunkte vorgesehen ist, ein zweiter Bildspeicher (32) zur Abspeicherung der von dem zweiten Differenzierer (30) gebildeten Differenzen der Phasenwerte, sowie ein zweiter Addierer (31) zur Bildung der Summe aus den im zweiten Bildspeicher abgespeicherten Differenzen der Phasenwerte eines ersten Phasenbildes und den von dem zweiten Differenzierer (30) gebildeten Differenzen der Phasenwerte spaltenweise benachbarter Datenpunkte eines weiteren Phasenbildes vorgesehen sind.

## Claims

1. Method for optical testing of samples (7; 16) with which information pertaining to the sample (7; 16) is in hand in the form of a pattern recorded by a camera (9; 18; 20) which is evaluated in the form of the raster of data points (P (i)), by computing phase values, expressed in modulo $2\pi$, corresponding to the data points (P (i)), by combining these phase values to a phase image and by calculating and representing the differences between the phase values of adjacent data points (P (i), P (i + 1)) of this phase image, characterized in that the differences between the phase values, expressed in modulo $2\pi$, of adjacent data points (P (i), P (i + 1)) of several phase images are summed up before further evaluation and that the further calculatory evaluation is performed by using these summed up differences.

2. Method of claim 1, characterized in that for the further calculatory evaluation the summed up differences are integrated along the raster of data points (P (i)) by a computer (34).

3. Method of claim 2, characterized in that the integral of the summed up differences is normalized by the number of the summed up phase images.

4. Method of one of the claims 1 to 3, characterized in that the pattern recorded by the camera (9) is an interferogram.

5. Method of claim 4, characterized in that the pattern recorded by the camera (9) is an interferogram of light reflected by the surface of the sample (7) and of light reflected by a reference surface (8).

6. Method of one of the claims 1 to 3, characterized in that the pattern recorded by the camera (18) is a periodic brightness distribution projected onto the sample (16).

7. Method of one of the claims 1 to 3, characterized in that the pattern recorded by the camera (18) is projected onto and transmitted through the surface of the sample (16).

8. Method of one of the claims 1-7, characterized in that the pattern recorded by the camera (20) is a two dimensional raster of data points (P (i, j)), that the differences between the phase values of adjacent data points in line as well as the differences between the phase values of adjacent data points in columns are calculated and expressed in modulo $2\pi$ and that the differences, expressed in modulo $2\pi$, of several phase images are summed up for each data point.

9. Apparatus for carrying out the method of claim 1, comprising: a camera (20) for recording of the pattern, a calculating unit (22) for calculating, in modulo $2\pi$, the phase values of the pattern with the aid of the output signals of the camera (20), a differentiating unit (26) for calculating the differences, expressed in modulo $2\pi$, between the phase values of adjacent data points, an image storage (28) for storing the differences of the phase values calculated by the differentiating unit (26), and an adding unit (27) for calculating the sum of the differences of the phase values of a first phase image stored in the image storage (28) and of the differences between the phase values of adjacent image points calculated by the differentiating unit (26) of a second phase image.

10. Apparatus of claim 9, wherein the camera (20) has a two dimensional sensor surface, a second differentiating unit (30) is provided for calculating the differences between the phase values of adjacent data points in columns, a second image storage (32) is provide for storing the differences between the phase values calculated by the second differentiating unit (30) and a second adding unit (31) is provided for calculating the sum of the differences between the phase values of a first phase imagestored in the second image storage and of the differences between the phase values of adjacent image points in columns, calculated by the second differentiating unit (30), of a further phase image.

## Revendications

1. Procédé pour l'examen optique de pièces d'essai (7; 16) où les informations relatives à la pièce d'essai (7; 16) sont contenues dans une figure qui est enregistrée par une caméra (9; 18; 20) et que l'on analyse sous forme d'une trame de points de données (P (i)), en calculant modulo $2\pi$ les valeurs de phase pour lesdits points de données (P (i)) et en les réunissant dans une image de phase, puis en formant les différences entre valeurs de phase de points de données voisins (P (i), P (i+ 1)) de cette image de phase et en les visualisant modulo $2\pi$, caractérisé en ce que l'on additionne avant leur évaluation consécutive les différences, visualisées modulo $2\pi$, entre valeurs de phase de points de données voisins (P (i), P (i+ 1)) de plusieurs images de phase et que l'évaluation numérique consécutive s'effectue au moyen des différences ainsi additionnées.

2. Procédé selon la revendication 1, caractérisé en ce qu'un ordinateur (34) effectue l'intégration des différences additionnées sur une trame de points de données (P (i)) en vue de leur évaluation numérique consécutive.

3. Procédé selon la revendication 2, caractérisé en ce que l'intégrale des différences additionnées est divisée par le nombre d'images de phase additionnées.

4. Procédé selon l'une des revendications 1 à 3, caractérisé en ce que la figure enregistrée par la caméra (9) est un interférogramme.

5. Procédé selon la revendication 4, caractérisé en ce que la figure enregistrée par la caméra (9) est un interférogramme résultant de l'interférence de la lumière réfléchie par la surface de la pièce (7) avec la lumière réfléchie par un étalon de surface (8).

6. Procédé selon l'une des revendications 1 à 3, caractérisé en ce que la figure enregistrée par la caméra (18) matérialise une répartition d'intensité périodique qui est projetée sur la pièce d'essai (16).

7. Procédé selon l'une des revendications 1 à 3, caractérisé en ce que la figure enregistrée par la caméra (18) est projetée sur la surface de la pièce d'essai (16) et transmise par celle-ci.

8. Procédé selon l'une des revendications 1 à 7, caractérisé en ce que la figure enregistrée par la caméra (20) est une trame bidimensionnelle de points de données (P (i, j)), que les différences entre les valeurs de phase sont formées pour les points de données voisins, aussi bien dans le sens des lignes (P (i), P (i+ 1)) que dans le sens des colonnes (P (i, j), P (i, j+ 1)), et visualisées respectivement modulo $2\pi$ et que les différences visualisées modulo $2\pi$ de plusieurs images de phase sont additionnées pour chaque point de données.

9. Dispositif pour la mise en oeuvre du procédé selon la revendication 1 comprenant une caméra (20) pour l'enregistrement de la figure, une unité arithmétique (22) pour le calcul modulo $2\pi$ des valeurs de phase de la figure à partir des signaux de sortie de la caméra (20), un circuit différenciateur (26) pour la formation des différences visualisées modulo $2\pi$ entre les valeurs de phase de points voisins, une mémoire d'image (28) pour le stockage des différences entre valeurs de phase formées par le circuit différenciateur (26), ainsi qu'un additionneur (27) servant à totaliser les différences entre les valeurs de phase d'une première image de phase, stockées dans la mémoire d'image (28), et les différences entre les valeurs de phase de points de données voisins d'un deuxième portrait de phase, formées par le circuit différenciateur (26).

10. Dispositif selon la revendication 9, où la caméra (20) présente une cible photoconductrice de surface bidimensionnelle, où un second circuit différenciateur (30) est prévu pour la formation des différences entre les valeurs de phase de points de données voisins dans le sens des colonnes et où une seconde mémoire d'image (32) et un second additionneur (31) sont prévus respectivement pour le stockage des différences entre valeurs de phase formées par le second circuit différenciateur (30) et pour la totalisation des différences entre les valeurs de phase d'une première image de phase, stockées dans la seconde mémoire d'image (32), et des différences entre les valeurs de phase de points de données voisins dans le sens des colonnes d'une autre image de phase, formées par le second circuit différenciateur (30).

Fig. 1a

Fig. 1b

## Fig. 2

EP 0 453 977 B1